Europäisches Patentamt

European Patent Office

Office européen des brevets

(19)

(11) Veröffentlichungsnummer : **0 065 734**
**B1**

(12)

# EUROPÄISCHE PATENTSCHRIFT

(45) Veröffentlichungstag der Patentschrift :
**18.09.85**

(21) Anmeldenummer : **82104304.9**

(22) Anmeldetag : **17.05.82**

(51) Int. Cl.⁴ : **A 61 G  7/06, A 61 G 12/00,**
**A 47 G  1/04**

(54) **Überkopf-Sichtspiegelvorrichtung für bettlägrige und gelähmte Personen.**

(30) Priorität : **19.05.81 DE 3119844**

(43) Veröffentlichungstag der Anmeldung :
**01.12.82 Patentblatt 82/48**

(45) Bekanntmachung des Hinweises auf die Patenterteilung : **18.09.85 Patentblatt 85/38**

(84) Benannte Vertragsstaaten :
**AT BE CH DE FR GB IT LI NL SE**

(56) Entgegenhaltungen :
**BE-A-   390 059**
**DE-A- 2 308 272**
**FR-A-   657 303**
**FR-A- 2 386 305**
**US-A- 1 395 812**
**US-A- 1 444 599**
**US-A- 2 590 657**

(73) Patentinhaber : **van den Berg, Christiaan**
**Maiderburchstraat 544**
**NL-6535 NV Nijmegen (NL)**

**Firma Presikhaaf**
**Ruitenbergglaan 29**
**NL-6800 EX Arnhem (NL)**

(72) Erfinder : **van den Berg, Christiaan**
**Maiderburchststraat 544**
**NL-6535 NV Nijmegen (NL)**

(74) Vertreter : **Schulze Horn, Stefan, Dipl.-Ing. et al**
**Patentanwälte Dipl.-Ing. S. Schulze Horn M.SC. Dr. H.**
**Hoffmeister Goldstrasse 36**
**D-4400 Münster (DE)**

**Beschreibung**

Die Erfindung betrifft eine Überkopf-Sichtspiegelvorrichtung für bettlägrige und gelähmte Personen, bestehend aus einer höhenverstellbaren Halterung, an der mehrere Spiegel bewegbar befestigt sind.

Bei einer aus der US-A-1 395 812 bekannten derartigen Vorrichtung sind an einer höhenverstellbaren Halterung ein Mittelspiegel, der aus einer senkrechten Ausgangsposition nach jeder Seite um bis zu (und mehr als) 30° um eine Achse verschwenkbar ist und zwei schräg zueinander angeordnete Seitenspiegel befestigt. Durch diese Spiegel wird einer bettlägrigen Person die Sicht in die Umgebung ermöglicht, ohne daß die Person sich dabei aufrichten muß. Nachteilig erlaubt die bekannte Vorrichtung nur die Betrachtung eines sehr begrenzten Raumwinkels. Insbesondere der Raum hinter dem Kopfende des Krankenbettes kann nicht eingesehen werden. Zwar ist die Halterung der Vorrichtung um eine senkrechte Achse verschwenkbar, diese Verschwenkbarkeit kann jedoch nur zu einem geringen Teil benutzt werden, weil die Spiegelanordnung zur Weiterverschwenkung aus dem Sichtbreich des Benutzers wandert. Aufgrund der geschilderten Beschränkungen ermöglicht es die bekannte Vorrichtung einem Kranken insbesondere nicht, mit ihrer Hilfe ein motorisch angetriebenes, verfahrbares Krankenbett zu steuern.

Es ist Aufgabe der vorliegenden Erfindung, eine Vorrichtung der eingangs genannten Art zu schaffen, die die genannten Nachteile des Standes der Technik vermeidet und die dem Benutzer einen Überblick über die gesamte Umgebung des Krankenbettes gibt. Insbesondere soll auch der Raum hinter dem Kopfende des Krankenbettes einsehbar sein und hierdurch die Möglichkeit gegeben sein, ein motorisch angetriebenes Krankenbett mit Hilfe der Vorrichtung zu steuern.

Diese Aufgabe wird erfindungsgemäß dadurch gelöst, daß

der Mittelspiegel beidseitig mit einer Spiegelfläche versehen ist,

auf beiden Seiten des Mittelspiegels je ein schräg zu demselben angeordneten Seitenspiegel angebracht ist und

die gesamte Spiegelanordnung um eine senkrechte Achse rotierbar ist.

Vorteilhaft sind die Seitenspiegel gegenüber dem Mittelspiegel verschwenkbar. Hierdurch wird das Blickfeld des Benutzers vergrößert.

Eine besonders komfortable Benutzung der Vorrichtung wird dadurch erreicht, daß die Verschwenkungen des Mittelspiegels und der Seitenspiegel und/oder die Rotation der gesamten Spiegelanordnung über Antriebsvorrichtungen bewirkt werden, die von einem Steuerpult aus in Tätigkeit gesetzt werden können.

Vorteilhaft ist der Mittelspiegel einseitig als Parabolspiegel ausgebildet. Hierdurch kann die Vorrichtung auch zum Lesen benutzt werden. Der Parabolspiegel ist vorteilhaft auf einem ausfahrbaren Balg angeordnet, um ihn leicht in eine zum Lesen geeignete Position zu bringen.

Die Halterung der erfindungsgemäßen Vorrichtung kann verfahrbar sein, so daß man sie in geeigneter Weise an das Kopfende eines Krankenbettes heranschieben kann. Sie kann auch so gestaltet sein, daß sie am Kopfende eines Krankenbettes montierbar ist. In diesem Fall ist vorteilhaft das Krankenbett mittels einer Antriebsvorrichtung verfahrbar, und die erfindungsgemäße Vorrichtung ermöglicht es dem Kranken beim Verfahren des Bettes die gesamte Umgebung zu beobachten.

Zur Vermeidung von Unfallgefahren bestehen der Mittelspiegel und die Seitenspiegel vorteilhaft aus splittersicherem Glas, beispielweise Plexiglas.

Zur weiteren Vergrößerung des Blickfeldes ist die Spiegelanordnung mit Mittel- und Seitenspiegeln als Ganzes vorteilhaft um eine im wesentlichen waagerechte Achse verschwenkbar.

Im folgenden werden Ausführungsbeispiele der Erfindung anhand der Zeichnung näher erläutert. Es zeigen :

Figur 1 eine erfindungsgemäße Vorrichtung mit verfahrbarer Halterung in Seitenansicht,

Figur 2 eine andere Ausführungsform der Vorrichtung, die an einem Krankenbett befestigt ist,

Figur 3 eine weitere, an einem Krankenbett befestigte Ausführungsform der Erfindung,

Figur 4 schematisch die mittels der Vorrichtung einsehbaren Raumwinkel,

Figur 5 eine Vorderansicht der Vorrichtung gemäß Figur 1,

Figur 6 eine Rückansicht der Vorrichtung gemäß Figur 1 und

Figuren 7a und 7b im Ausschnitt eine andere Ausführungsform des Mittelspiegels.

Figuren 8 und 9 eine Ausführungsform mit höhenverstellbarer und drehbarer Spiegelanordnung.

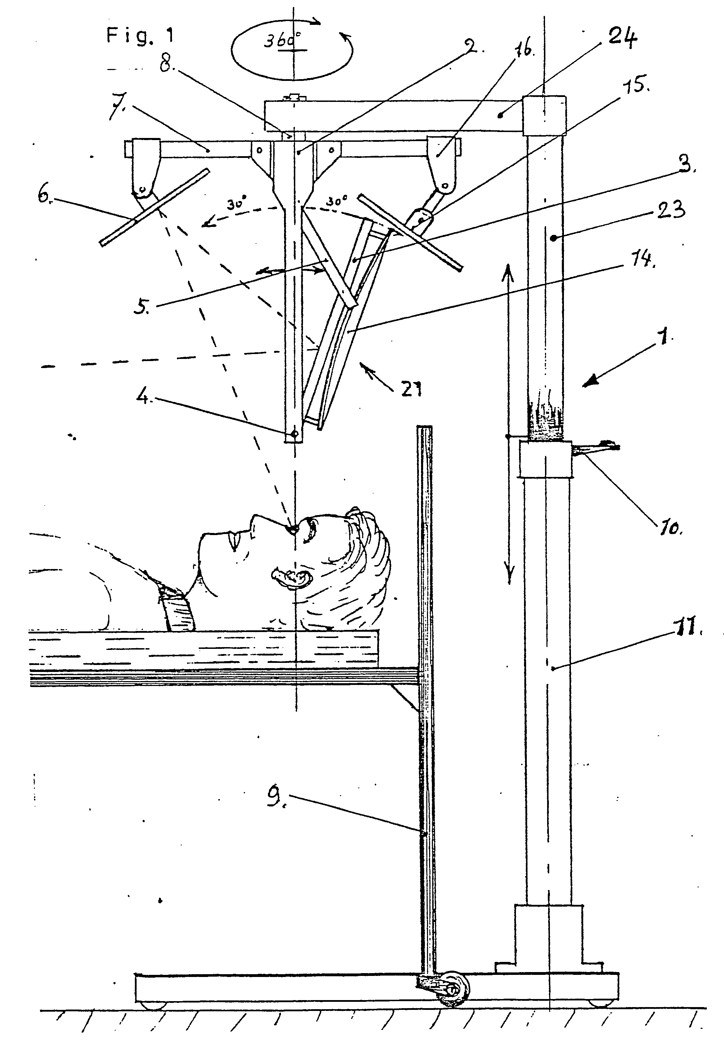

Die Vorrichtung besteht aus einer abgewinkelten Halterung 1, bei der ein an einem Ständer 23 befestigter Haltearm 24 gemäß Figur 1 telexkopartig aus einem verfahrbaren Fuß 11 ausziehbar ist. Durch einen Hebel 10 kann die eingestellte Höhe arretiert werden. Am Ende des waagerechten Haltearms 24 ist eine rotierbare Achse 8 angebracht. Diese Achse 8 trägt einen Träger 2 des Mittelspiegels 21 und zwei Tragarme 7 für die Seitenspiegel 6 und 15. Die Seitenspiegel 6 und 15 sind über Gelenke 16 verschwenkbar an den Enden der Tragarme 7 angelenkt. Der Mittelspiegel 21 weist einen Planspiegel 3 und auf der gegenüberliegenden Seite einen Parabolspiegel 14 auf. Der Mittelspiegel 21 ist an seinem unteren Enden an einer Verschwenkachse 4 befestig, um die ein Verschwenken aus der senkrechten Ausgangsposition nach vorn und hinten um jeweils bis zu 30° möglich ist. Die Verschwenkung wird über einen Antriebsarm 5 bewirkt.

Wie die Figur 1 zeigt, kann die Vorrichtung so über das Kopfende 9 eines Krankenbettes geschoben werden, daß sich die rotierbare Achse 8 über dem Auge des Benutzers befindet. Die Vorrichtung ermöglicht dann dem Benutzer einen Blick in die Umgebung, ohne daß er hierzu den Kopf anheben muß. Der Strahlengang ist gestrichelt wiedergegeben.

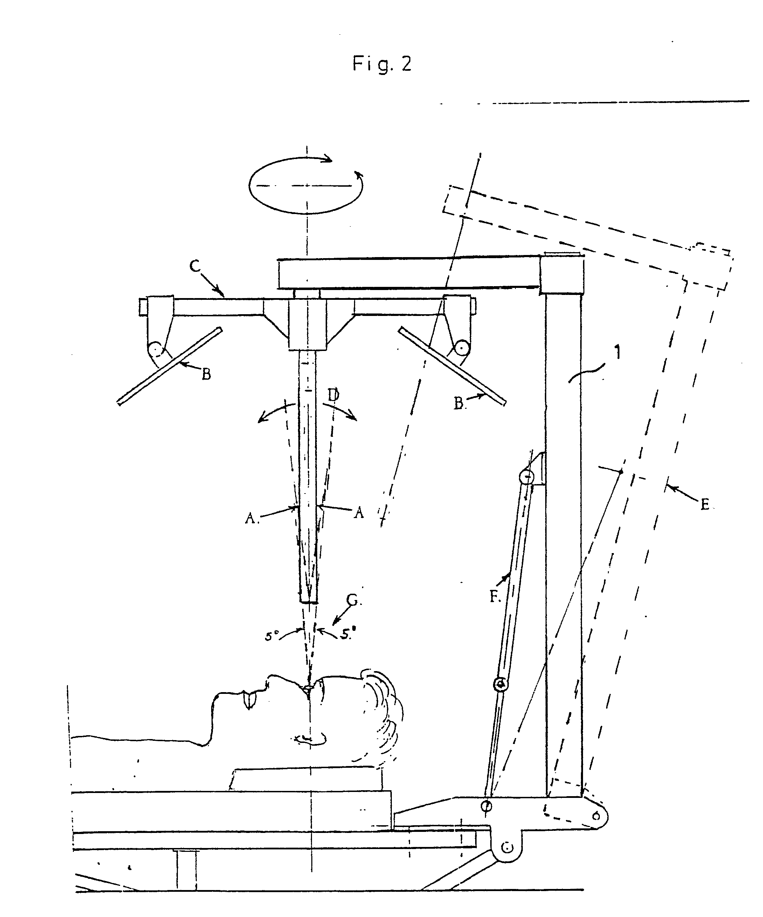

Figur 2 zeigt eine andere Ausführungsform der Erfindung, bei der die Vorrichtung am Kopfende eines Selbstfahr-Krankenbettes montiert ist. Bei dieser Ausführungsform ist die Halterung 1 gegenüber dem Bett verschwenkbar (Schwenkstellung gestrichelt dargestellt).

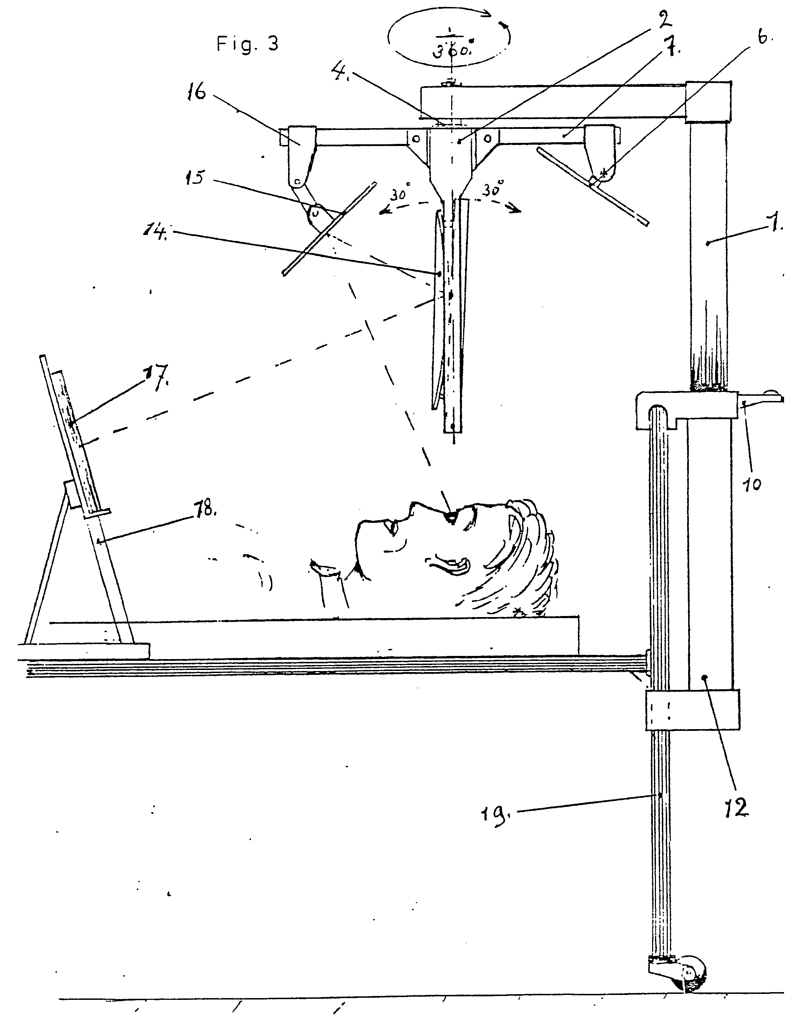

In Figur 3 ist eine weitere Ausführungsform der Erfindung dargestellt, bei der die Vorrichtung ebenfalls am Kopfende 19 eines Bettes mittels einer Halterung 12 befestigt ist. Hierbei ist der Parabolspiegel 14 nach vorn gedreht und der Kranke benutzt die Vorrichtung zum Lesen in einem Buch 17, das auf einem Ständer 18 angeordnet ist, wie der gestrichelte Strahlengang zeigt.

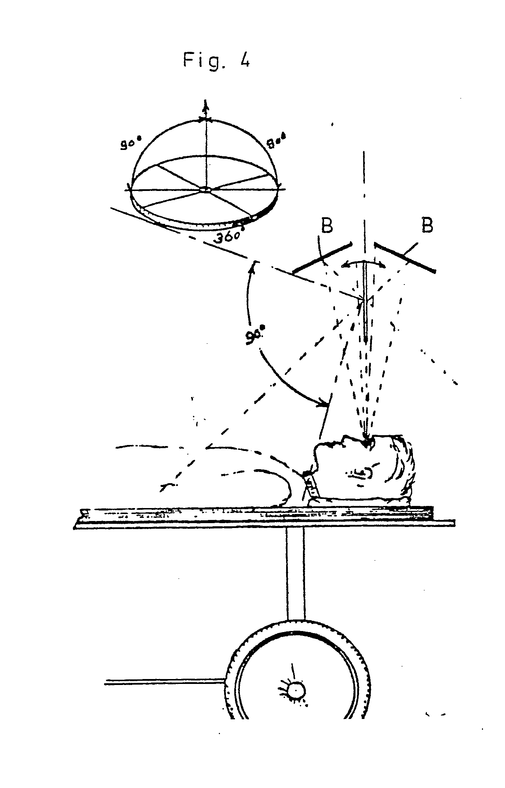

Figur 4 zeigt schematisch, daß der Benutzer der Vorrichtung ein Gesichtsfeld hat, das sich in der Horizontalen über 360° und in der Vertikalen über 90° erstreckt.

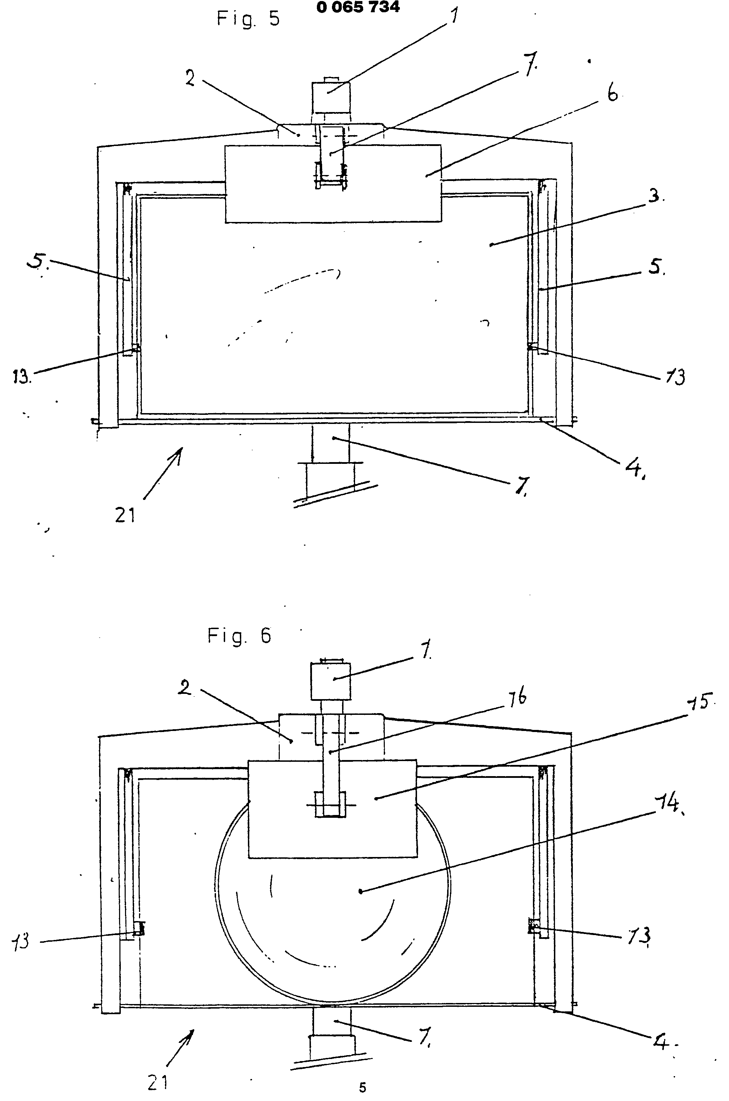

Aus der Vorderansicht gemäß Figur 5 und der Rückansicht gemäß Figur 6 wird insbesondere die Befestigung des Mittelspiegels 21 deutlich, der an seinem unteren Ende von der Verschwenkachse 4 getragen wird und über Gelenkbolzen 13 mit den Antriebsarmen 5 verbunden ist.

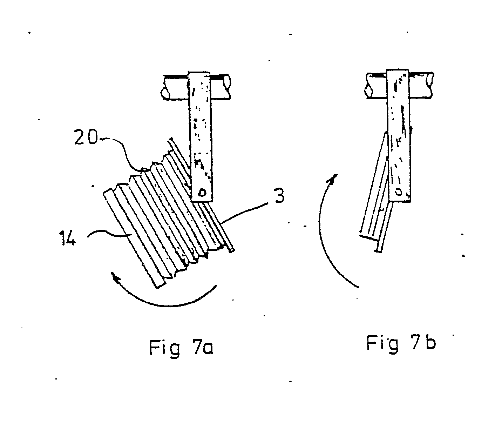

In den Figuren 7a und 7b ist eine andere Ausführungsform des Mittelspiegels 21 dargestellt, bei der der Parabolspiegel 14 auf einem ausziehbaren Balg 20 angeordnet ist. Hierdurch kann der Parabolspiegel in eine zum Lesen geeignete Position gebracht werden.

Die Antriebsvorrichtungen für die verschiedenen Verstellmöglichkeiten der Spiegelanordnung können elektrische Stellmotoren, oder auch pneumatische oder hydraulische Vorrichtungen sein. Diese Antriebsvorrichtungen stehen im Belieben des Fachmannes, sie sind daher in der Zeichnung nicht dargestellt und brauchen nicht näher beschrieben zu werden.

Die erfindungsgemäße Überkopf-Sichtspiegelvorrichtung ermöglicht ihrem Benutzer einen Überblick über die gesamte Umgebung des Krankenbettes. Sie gestattet eine vollkommene Rundumsicht und gibt dem Kranken die Möglichkeit, mit ihrer Hilfe ein verfahrbares Bett selbst zu steuern. Weiterhin kann die Vorrichtung dem Kranken das Lesen und Fernsehen ermöglichen und ihm den Blickkontakt zu einem Besucher ermöglichen.

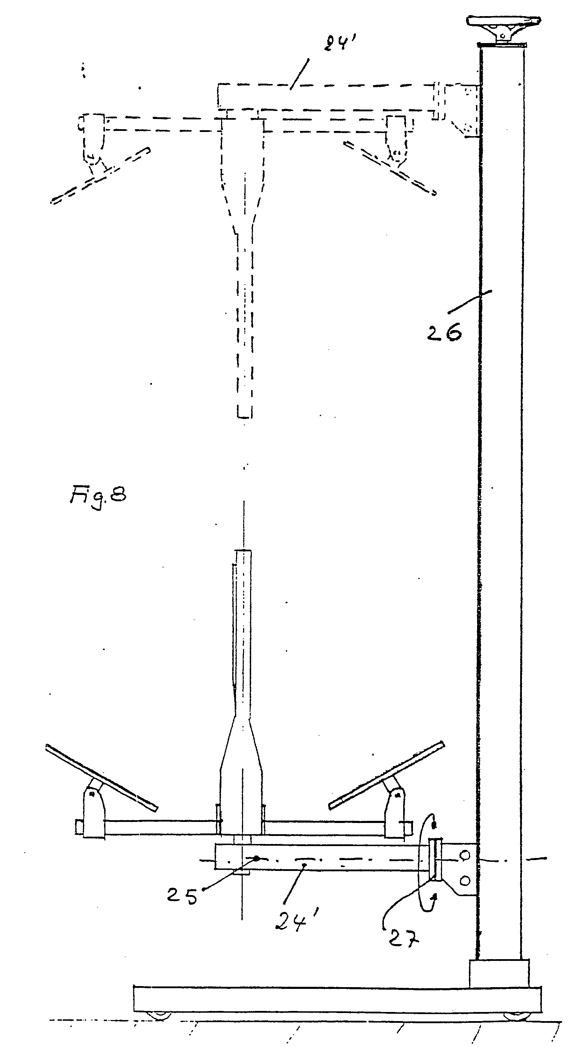

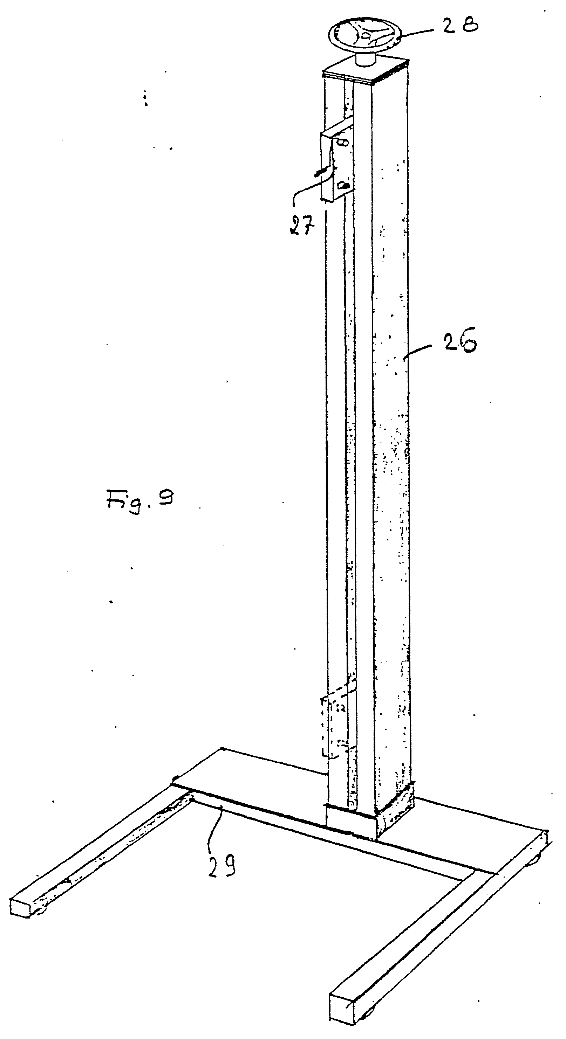

Die Speigelanordnung gemäß Ausführungsbeispielen läßt sich weiterhin auch so an einem drehbaren Haltearm anbringen, daß die Spiegelanordnung mit Mittel- und Seitenspiegeln 21, 6, 15 als Ganzes um eine im wesentlichen waagerechte Achse 25 gedreht werden kann. Gleichzeitig ist der Haltearm 24' entlang eines Schienenständers 26 höhenverschiebbar und arretierbar angeordnet. Die wird ermöglicht durch ein im Schienenständer 26 verschiebbares Drehgelenk 27. Die Figuren 8 und 9 zeigen das entsprechende Ausführungsbeispiel. Verstellung kann über ein Handrad 28, beispielsweise über eine Spindelwelle (nicht dargestellt) geschehen. Auch bei diesem Ausführungsbeispiel kann die Spiegelanordnung als Ganzes auf einem Fahrgestell verfahrbar angeordnet sein. Die vorstehend anhand der Figuren 8 und 9 beschriebene Anordnung dient für Patienten, die von Zeit zu Zeit aus der Rückenlage in die Bauchlage zusammen mit der Liegeauflage gedreht werden müssen.

## Patentansprüche

1. Überkopf-Sichtspiegelvorrichtung für bettlägrige und gelähmte Personen, bestehend aus einer höhenverstellbaren Halterung (1), an der ein Mettelspiegel (21), der aus einer senkrechten Ausgangsposition nach jeder Seite um bis zu 30 ° um eine Achse (4) verschwenkbar ist und zwei schräg zum Mittelspiegel angeordnete Seitenspiegel (6, 15) befestigt sind, dadurch gekennzeichnet, daß
der Mittelspiegel (21) beidseitig mit einer Spiegelfläche (3, 14) versehen ist,
auf beiden Seiten des Mittelspiegels (21) je ein schräg zu demselben angeordneter Seitenspiegel (6, 15) angebracht ist und
die gesamte Spiegelanordnung um eine senkrechte Achse (8) rotierbar ist.

2. Vorrichtung nach Anspruch 1, dadurch gekennzeichnet, daß die Seitenspiegel (6, 15) gegenüber dem Mittelspiegel (21) verschwenkbar sind.

3. Vorrichtung nach Anspruch 1 oder 2, dadurch gekennzeichnet, daß die Verschwenkungen des Mittelspiegels (21) und der Seitenspiegel (6, 15) und/oder die Rotation der gesamten Spiegelanordnung über Antriebsvorrichtungen bewirkt werden, die von einer Steuervorrichtung aus in Tätigkeit gesetzt werden können.

4. Vorrichtung nach Anspruch 1 bis 3, dadurch gekennzeichnet, daß der Mittelspiegel (21) einseitig als Parabolspiegel (14) ausgebildet ist.

5. Vorrichtung nach Anspruch 4, dadurch gekennzeichnet, daß der Parabolspiegel (14) auf einem ausfahrbaren Balg (20) angeordnet ist.

6. Vorrichtung nach Anspruch 1 bis 5, dadurch gekennzeichnet, daß die Halterung (1) verfahrbar ist.

7. Vorrichtung nach Anspruch 1 bis 5, dadurch gekennzeichnet, daß die Halterung (1) am Kopfende (19) eines Krankenbettes montierbar ist.

8. Vorrichtung nach Anspruch 7, dadurch gekennzeichnet, daß das Krankenbett mittels einer Antriebsvorrichtung verfahrbar ist.

9. Vorrichtung nach Anspruch 1 bis 8, dadurch gekennzeichnet, daß der Mittelspiegel (21) und die Seitenspiegel (6, 15) aus splittersicherem Glas bestehen.

10. Vorrichtung nach einem der vorhergehenden Ansprüche, dadurch gekennzeichnet, daß die Spiegelanordnung mit Mittel- und Seitenspiegeln (21 ; 6, 15) als Ganzes um eine im wesentlichen waagerechte Achse (25) verschwenkbar ist.

**Claims**

1. An overhead-mirror viewing device for persons confined to the bed or for the paralysed, comprising a vertically adjustable bracket (1) which has mounted thereto a center mirror (21) adapted to be pivoted from a vertical initial position about an axis (4) to either side by up to 30°, and a pair of side mirrors (6, 15) disposed obliquely to the center mirror, characterized in that

the center mirror (21) is provided with a reflector surface (3, 14) on both sides thereof,

on side mirror (6, 15) is each disposed on opposite sides of the center mirror (21) in an oblique position relative to the latter, and

the entire mirror assembly is adapted to be rotated about a vertical axis (8).

2. The device according to claim 1, characterized in that the side mirrors (6, 15) are adapted to be pivoted relative to the center mirror (21).

3. The device according to claims 1 or 2, characterized in that pivoting of the center mirror (21) and of the side mirrors (6, 15) and/or rotating of the entire mirror assembly may be effected through driving devices adapted to be actuated from a control device.

4. The device according to claims 1 to 3, characterized in that the center mirror (21) has one side thereof formed as a parabolic mirror (14).

5. The device according to claim 4, characterized in that the parabolic mirror (14) is mounted to an extensible bellows (20).

6. The device according to claims 1 to 5, characterized in that the bracket (1) is adapted to be moved.

7. The device according to claims 1 to 5, characterized in that the bracket (81) is adapted to be mounted to the head end (19) of a sick-bed.

8. The device according to claim 7, characterized in that the sick-bed is adapted to be moved by means of a driving device.

9. The device according to claims 1 to 8, characterized in that the center mirror (21) and the side mirrors (6, 15) are formed of splinterproof glass.

10. The device according to any one of the preceding claims, characterized in that the mirror assembly including the center mirror and side mirrors (21 ; 6, 15) is adapted to be pivoted as a unit around a substantially horizontal axis (25).

**Revendications**

1. Dispositif de vision surélevé à miroirs pour personnes alitées et paralysées, comportant des moyens de support (1) ajustables en hauteur sur lesquels sont fixés un miroir médian (21) mobile angulairement autour d'un axe (4) vers chaque côté, à partir d'une position initiale verticale, d'un angle pouvant atteindre 30°, ainsi que deux mirois latéraux (6, 15) disposés obliquement par rapport au miroir médian, caractérisé en ce que :

le miroir médian (21) comporte sur ses deux faces une surface réfléchissante (3, 14) ;

deux miroirs latéraux (6, 15) orientés obliquement par rapport au miroir médian (21) sont disposés respectivement sur les deux côtés de ce dernier, et

l'ensemble des miroirs est monté à rotation autour d'un axe vertical (8).

2. Dispositif selon la revendication 1, caractérisé en ce que les miroirs latéraux (6, 15) sont susceptibles de pivoter par rapport au miroir médian (21).

3. Dispositif selon la revendication 1 ou 2, caractérisé en ce que les mouvements de pivotement du miroir médian (21) et des miroirs latéraux (6, 15) et/ou la rotation de l'ensemble des miroirs sont provoqués par des dispositifs d'entraînement susceptibles d'être actionnés à partir d'un système de commande.

4. Dispositif selon la revendication 1 à 3, caractérisé en ce qu'une des faces du miroir médian (21) forme un miroir parabolique (14).

5. Dispositif selon la revendication 4, caractérisé en ce que le miroir parabolique (14) est disposé sur un soufflet extensible (20).

6. Dispositif selon la revendication 1 à 5, caractérisé en ce que les moyens de support (1) sont mobiles.

7. Dispositif selon la revendication 1 à 5, caractérisé en ce que les moyens de support (1) sont susceptibles d'être montés sur l'extrémité de tête (19) d'un lit de malade.

8. Dispositif selon la revendication 7, caractérisé en ce que le lit de malade est mobile à l'aide d'un système d'entraînement.

9. Dispositif selon la revendication 1 à 8, caractérisé en ce que le miroir médian (21) et les miroirs latéraux (6, 15) sont réalisés en verre pare-éclats ou de sécurité.

10. Dispositif selon une des revendications précédentes, caractérisé en ce que l'ensemble comprenant les miroirs médian et latéraux (21, 6, 15) est capable de pivoter en bloc autour d'un axe (25) sensiblement horizontal.

Fig. 1

Fig. 2

Fig. 3

Fig. 4

**0 065 734**

Fig. 5

Fig. 6

Fig 7a                    Fig 7b

24'

26

Fig.8

25

24'

27

7

Fig. 9